# FASCICULE DE BREVET EUROPEEN

(11) **EP 1 258 418 B1**
(45) Date de publication et mention de la délivrance du brevet: **20.12.2006**
(21) Numéro de dépôt: 02291193.7
(22) Date de dépôt: 14.05.2002
(51) Int. Cl.: B62D 29/04, B60R 19/24

(54) **Agencement de fixation de deux éléments adjacents de carrosserie**
Befestigung für zwei anliegende Karrosserieteile
Fixation for two adjacent body elements

(30) Priorité: 14.05.2001 FR 0106294
(43) Date de publication de la demande: 20.11.2002
(73) Titulaire: Renault s.a.s., 92100 Boulogne Billancourt (FR); ADAM OPEL AG, 65423 Rüsselsheim (DE)
(72) Inventeur: Leleu, Jean-Marc, 78690 Les Essarts le Roi (FR); Agdid, Lahcen, 78340 Les Clayes-sous-Bois (FR)
(74) Mandataire: Kohn, Philippe

(56) Documents cités:
- EP-A- 1 000 814

## Description

L'invention concerne un agencement de fixation de deux éléments adjacents de carrosserie.

L'invention concerne plus particulièrement un agencement de fixation d'un premier et d'un second éléments adjacents carrosserie et/ou d'habillage sur un élément structurel de caisse du véhicule.

Il est connu de fixer les éléments de carrosserie et/ou d'habillage sur un élément structurel tel qu'une doublure de pied avant du véhicule. Ainsi, chaque extrémité latérale du bouclier avant est reliée à un élément de structure par une première pièce intermédiaire telle qu'un pontet de fixation. De façon similaire, chaque aile avant est fixée sur une seconde pièce intermédiaire qui permet leur assemblage avec la caisse du véhicule.

Un tel agencement nécessite alors deux premières et deux secondes pièces intermédiaires pour fixer le bouclier avant ainsi que les deux ailes avant droite et gauche sur la structure du véhicule. Les quatre pièces intermédiaires différentes doivent être conçues, fabriquées, stockées et gérées individuellement ce qui provoque des coûts élevés.

Il a déjà été proposé de réaliser des première et seconde pièces intermédiaires symétriques qui peuvent être utilisées indifféremment à gauche et à droite du véhicule. Cela permet de réduire une partie des coûts de conception, de fabrication et de stockage. Cependant, de telles pièces comportent une partie centrale sur chacune des faces desquelles peut être, par exemple, fixée une aile droite ou gauche. Cette conception permet une bonne accessibilité des moyens de fixation de l'aile ou du bouclier avant sur la partie centrale, mais la rigidité de la pièce intermédiaire n'est pas suffisante. De plus, l'assemblage des ailes et du bouclier avant nécessite la manipulation et la fixation de quatre pièces intermédiaires sur des éléments de structure du véhicule. Cela augmente le nombre d'opérations ainsi que le temps de montage.

Le document EP-A-1.000.814, suivant les particularités du préambule de la revendication 1, décrit un agencement pour la fixation d'au moins deux éléments d'habillage sur un élément de carrosserie d'un véhicule automobile par l'intermédiaire d'une pièce commune de fixation. La pièce commune de fixation comporte des logements qui reçoivent des portions complémentaires des éléments d'habillage, de manière que les éléments d'habillage sont positionnés de manière définie par rapport à la pièce commune de fixation.

Les éléments d'habillage sont positionnés les uns par rapport aux autres de manière définie par l'intermédiaire de la pièce de fixation, c'est-à-dire qu'il n'est pas possible de modifier cette position relative des éléments d'habillage.

Dans le but de remédier à ces inconvénients, l'invention propose un agencement de fixation d'un premier et d'un second éléments adjacents carrosserie et/ou d'habillage sur un élément structurel de caisse du véhicule, caractérisé en ce qu'il comporte une pièce commune de fixation pour l'assemblage et la fixation du premier et du second élément par rapport à la structure du véhicule.

Selon d'autres caractéristiques de l'invention :
- la pièce commune de fixation comprend :
   - deux pieds longitudinaux qui comportent chacun une zone de fixation avec l'élément structurel de caisse ;
   - deux flasques transversaux qui sont chacun solidaires d'un pied longitudinal, qui sont sensiblement parallèles entre eux et qui comportent chacun des zones de fixation du premier élément adjacent du véhicule ainsi que des moyens de passage d'un outil de fixation lors de l'assemblage du premier élément adjacent sur le flasque latéral opposé, les moyens de passage de l'outil étant sensiblement alignés avec les zones de fixation du premier élément adjacent selon une direction sensiblement perpendiculaire au flasque opposé ; et
   - un dos latéral qui relie les deux flasques transversaux et qui comporte des moyens de maintien du second élément adjacent ;
- les pieds longitudinaux sont fixés sur une paroi de l'élément structurel de caisse qui est orientée vers un côté latéral du véhicule ;
- les deux flasques transversaux s'étendent dans des plans sensiblement perpendiculaires aux pieds longitudinaux ;
- au moins un flasque latéral comporte un évidement qui permet, lors de l'assemblage, le passage d'une languette de guidage du premier élément adjacent de façon à maintenir ces deux pièces l'une par rapport à l'autre, avant leur fixation ;
- les moyens pour le passage d'un outil de fixation comprennent au moins une ouverture réalisée dans le flasque latéral ;
- les pieds longitudinaux et les moyens de maintien du second élément adjacent sont contenus dans deux plans sensiblement parallèles ;
- les zones de fixation des pieds longitudinaux comportent un trou dont le diamètre est supérieur au diamètre des premiers moyens de fixation avec lequel il coopère, de façon à permettre le réglage de la position de la pièce commune par rapport à l'élément structurel de caisse, avant leur fixation ;
- les zones de fixation des flasques transversaux comportent au moins un trou dont le diamètre est supérieur au diamètre des seconds moyens de fixation avec lequel il coopère, de façon à permettre le réglage de la position du premier élément adjacent par rapport à la pièce commune, avant leur fixation ;
- les moyens de maintien du second élément adjacent comportent au moins un trou dont le diamètre est supérieur au diamètre des troisièmes moyens de fixation avec lequel il coopère, de façon à permettre le réglage de la position du second élément adjacent par rapport à la pièce commune, avant leur fixation ;
- le premier élément adjacent est un bouclier avant du véhicule ;
- le second élément adjacent est une aile avant droite ou avant gauche du véhicule.

D'autres caractéristiques et avantages de l'invention apparaîtront à la lecture de la description détaillée qui suit pour la compréhension de laquelle on se reportera aux figures dans lesquels :
- la figure 1 représente une vue schématique, avec arrachement partiel, du côté de l'avant d'un véhicule automobile équipé d'un agencement du bouclier avant et de l'aile avant gauche du véhicule selon l'invention ;
- la figure 2 représente en perspective la pièce commune de fixation pour l'assemblage et la fixation du bouclier avant et d'une aile avant selon l'invention ;
- la figure 3 représente une perspective similaire à celle de la figure 2 selon une orientation différente ;
- la figure 4 représente en vue de côté la pièce commune de fixation selon l'invention ;
- la figure 5 est une section selon la ligne 5-5 de la figure 4 qui représente la pièce commune fixée sur un élément de structure véhicule et sur laquelle sont agencés le bouclier avant et l'aile ;
- la figure 6 représente une section similaire à celle de la figure 5 selon la ligne 6-6 de la figure 4 ;
- la figure 7 représente une section similaire à celle de la figure 5 selon une ligne 7-7 de la figure 4.

Dans la description qui va suivre, on utilisera, à titre non limitatif, des orientations longitudinale correspondant à l'axe X-X, verticale correspondant à l'axe Z-Z et transversale correspondant à l'axe Y-Y.

Dans l'exemple proposé, une pièce de fixation commune 10 est orientée selon un repère d'axes X'-X' et Z'-Z' qui est décalé angulairement par rapport à l'axe horizontal Y-Y d'un angle α.

Dans la suite de la description, on considèrera que l'angle α est faible et que, ainsi, les axes X'-X' et Z'-Z' sont orientés sensiblement longitudinalement et verticalement respectivement.

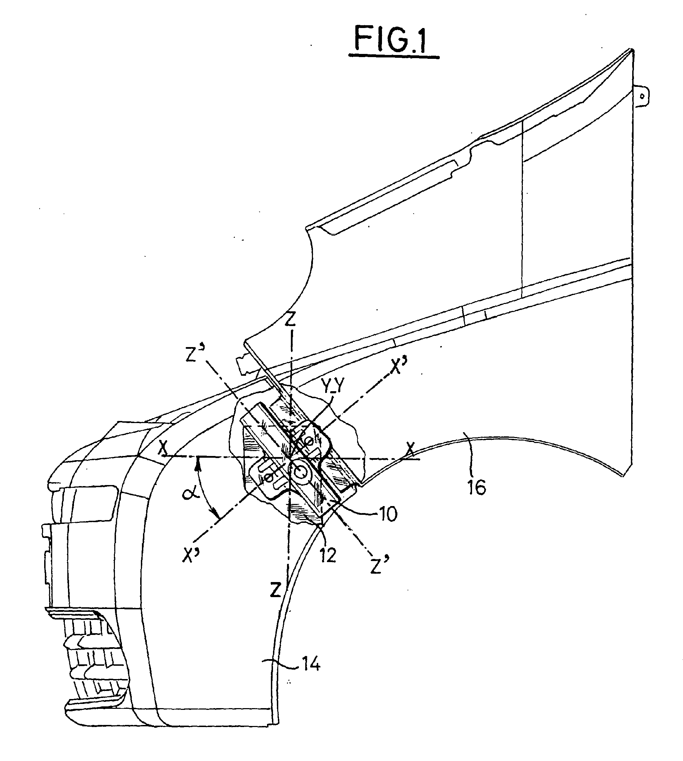

La figure 1 représente une vue schématique de l'avant d'un véhicule automobile, et notamment d'un véhicule utilitaire. La pièce de fixation commune 10 est fixée sur une paroi d'un élément structurel 12 de caisse du véhicule qui est orienté sensiblement verticalement et qui est tourné vers un côté latéral du véhicule. L'élément structurel 12 peut être, par exemple, une doublure de pied avant.

L'élément structurel 12 de caisse du véhicule peut être relié à un longeron ou une traverse de la caisse par un procédé tel que le soudage.

Un bouclier avant 14 formant "pare-chocs" ainsi qu'une aile avant 16, ici l'aile avant gauche, sont reliés, par exemple, par un assemblage vissé à la pièce de fixation commune 10.

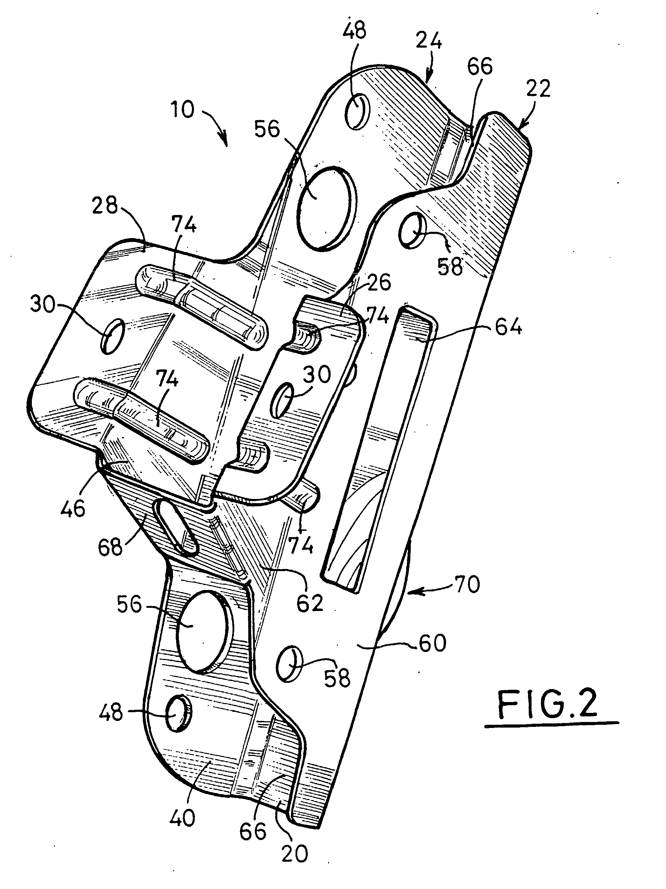

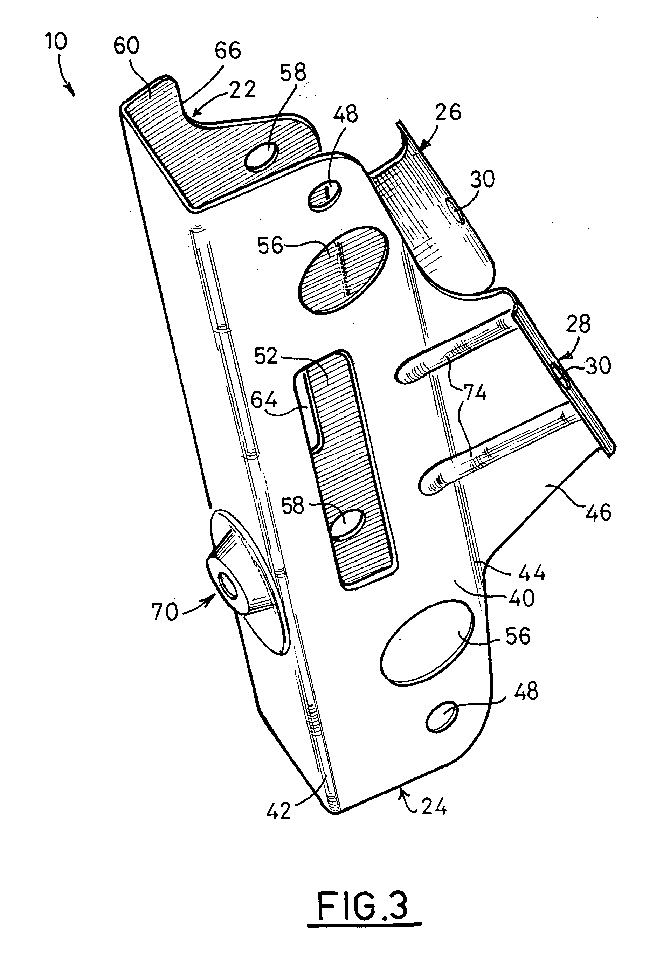

La pièce de la fixation commune 10, conformément aux figures 2 à 4, comporte un dos latéral 20 qui relie deux flasques transversaux avant 22 et arrière 24 qui sont reliés chacun à un pied longitudinal avant 26 et arrière 28 respectivement.

Les pieds longitudinaux 26 et 28 s'étendent dans un plan sensiblement perpendiculaire à l'axe Y-Y. Ils comportent chacun une zone de fixation avec l'élément structurel 12 dans chacune desquelles un trou 30 est réalisé. La figure 5 représente une section qui traverse diamétralement les trous 30.

Les trous 30 permettent le passage de premiers moyens de fixation 31 tels qu'un assemblage du type vis-écrou de façon à maintenir dans une position déterminée les pieds longitudinaux 26, 28 par rapport à l'élément structurel 12.

Avantageusement, le diamètre des trous 30 est supérieur au diamètre des premiers moyens de fixation 31 par lesquels ils sont traversés. Ainsi, lors du montage, la position de la pièce commune de fixation 10 peut être ajustée avant le serrage des moyens de fixation 31.

Les flasques transversaux 22 et 24 et le dos latéral 20 formes un élément qui présente en section, une forme de U renversé (voir figure 5).

Les flasques transversaux 22, 24 s'étendent dans des plans perpendiculaires à celui qui contient les pieds longitudinaux 26, 28.

La conception de la pièce de fixation commune 10 permet d'utiliser cette pièce unique 10 indifféremment du côté droit ou du côté gauche du véhicule pour fixer soit la partie droite du bouclier avant 14 et l'aile avant droite, soit la partie gauche du bouclier avant 14 et l'aile avant gauche 16.

Pour ce faire, le flasque transversal arrière 24 est constitué d'une première partie 40 de forme sensiblement rectangulaire dont une arrête d'extrémité 42 est reliée au dos latéral 20 et dont une arrête intermédiaire 44 est raccordée à une seconde partie 46 de forme triangulaire tronquée à laquelle est connecté le pied longitudinal arrière 28.

La première partie 40 comporte, à proximité de chacune de ses extrémités supérieure et inférieure, un trou de fixation 48 supérieur et inférieur respectivement, qui permet le passage d'un élément de fixation, tel qu'une vis, de deuxièmes moyens de fixation 50. La figure 5 est une section selon la ligne 5-5 qui passe par le centre du trou de fixation inférieure 48.

Les deuxièmes moyens de fixation 50 permettent de maintenir en position l'aile avant gauche 16.

Avantageusement, le diamètre des trous 48 est supérieur au diamètre des deuxièmes moyens de fixation 50 par lesquels ils sont traversés. Ainsi, lors du montage, la position de la l'aile avant gauche 16 par rapport à la pièce commune de fixation 10 peut être ajustée avant le serrage des deuxièmes moyens de fixation 50.

La flasque transversal arrière 24 comporte au centre de sa première partie 40 un évidement 52 dont une section transversale est représentée à la figure 5. L'évidement 52 permet, lors de l'assemblage, le passage d'une languette de guidage 54 de l'aile avant gauche 16 de façon à maintenir ces deux pièces l'une par rapport à l'autre avant leur fixation par les deuxièmes moyens de fixation 50.

Le flasque transversal arrière 24 comprend encore deux moyens de passage 56 dont les centres sont sensiblement alignés selon l'axe longitudinal X'-X' avec les centres des trous de fixation 58 réalisés dans le flasque transversal 22. Lorsque la pièce commune de fixation 10 est assemblée sur le côté droit du véhicule, les moyens de passage 56 permettent, le passage d'un outil de fixation, tel qu'une visseuse pneumatique, pour la fixation de l'aile droite sur le flasque transversal avant 22. Ils facilitent ainsi l'accès à des moyens de fixation, non représentés, de l'aile avant droite sur le flasque transversal avant 22.

De façon similaire, le flasque transversal avant 22, est constitué d'une première partie 60 et une seconde partie 62.

Les secondes parties 46 et 62 des flasques transversaux arrière 24 et avant 22 respectivement permettent d'orienter le dos latéral 20 autour de l'axe X'-X' de façon qu'il soit sensiblement parallèle à la zone de la face intérieure du bouclier avant 14 qui est située à proximité de la pièce commune de fixation 10.

La première partie 60 comprend, outre les trous de fixation 58, un évidement droit 64.

Le flasque transversal avant 22 comporte des moyens de passage 66, tel qu'une échancrure, qui sont situés à proximité de chacune de ses extrémités supérieure et inférieure. Les moyens de passage 66 sont alignés avec les trous de fixation 48 selon l'axe longitudinal X'-X'. Ils permettent, lors de la fixation de l'aile avant gauche 16 sur le flasque transversal arrière 24, le passage d'un outil de fixation, ils facilitent ainsi l'accès aux seconds moyens de fixation 50.

Les deux flasques transversaux avant 22 et arrière 24 sont reliés par une plaque de renfort 68 qui s'étend dans un plan sensiblement parallèle au plan défini par les axes X'-X' et Y-Y. La plaque de renfort 68 permet d'augmenter la rigidité de la pièce commune de fixation 10.

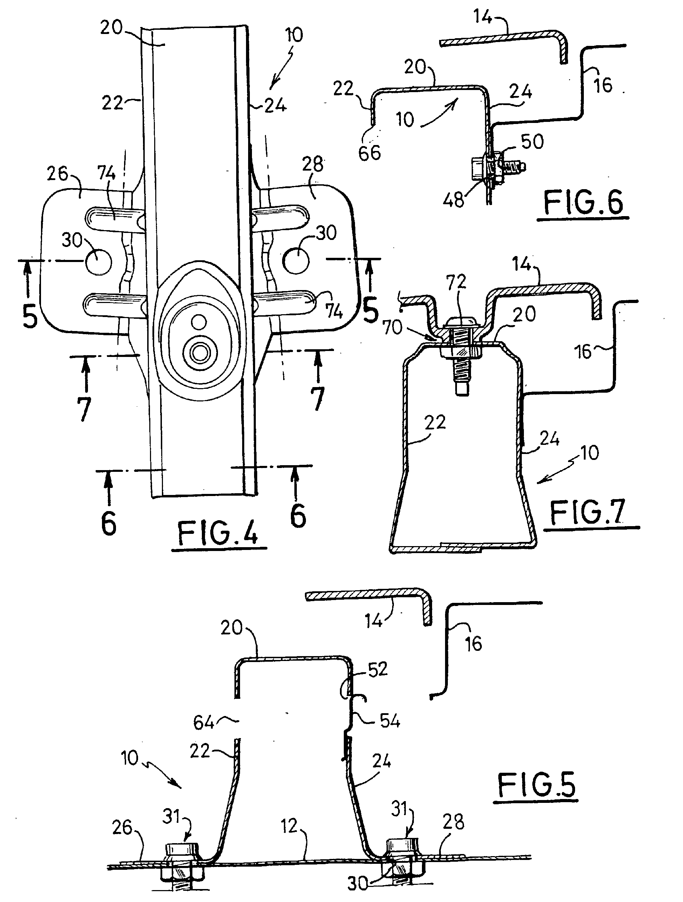

Le dos latéral 20 comporte des moyens de maintien 70 qui sont traversés par la section 7-7 représenté à la figure 7. Les moyens de maintien 70 permettent le passage des troisièmes moyens de fixation 72 tels qu'un assemblage du type vis-écrou qui coopère avec une zone déterminée du bouclier avant 14. Ainsi, le bouclier avant 14 est maintenu dans une position déterminée par rapport au dos latéral 20 de la pièce commune de fixation 10. Les moyens de maintien 70 sont réalisés de façon que, lors de l'assemblage, ils s'étendent dans un plan sensiblement parallèle à la zone déterminée du bouclier avant 14. Les moyens de maintien 70 peuvent être réalisés par emboutissage du dos latéral 20.

De façon similaire aux trous 30 et 48, les moyens de maintien 70 permettent, lors du montage du bouclier avant 14 sur la pièce commune de fixation 10, le réglage de la position de ces deux pièces l'une par rapport à l'autre. À cet effet, lorsque les moyens de maintien 70 comportent un trou, le diamètre de ce trou est supérieur au diamètre des troisièmes moyens de fixation 72.

De façon avantageuse, la pièce commune de fixation 10 comporte des nervures de renforts 74 qui s'étendent d'une part sur le flasque transversal avant 22 et sur le pied longitudinal avant 26 et, d'autre part, sur le flasque transversal arrière 24 et sur le pied longitudinal arrière 28. Ainsi, la rigidité de la pièce commune de fixation 10 est accrue ce qui augmente sa tenue mécanique et renforce la fixation des ailes avant et du bouclier avant 14 sur la structure du véhicule.

La pièce commune de fixation 10 permet la fixation du bouclier avant 14 et d'une aile avant qui peut être indifféremment l'aile droite ou l'aile gauche du véhicule et un seul modèle de pièce est nécessaire pour chaque type de véhicule. Ainsi, les coûts de conception, de fabrication, de gestion et de stockage de la pièce commune de fixation 10 sont fortement réduits par rapport aux coûts des deux ou quatre pièces nécessaires auparavant.

Un exemple d'assemblage de la pièce commune de fixation 10, avec le bouclier avant et une aile avant sur le véhicule est le suivant.

La pièce commune de fixation 10 pouvant être utilisée indifféremment pour l'assemblage de l'aile avant gauche 16 ou de l'aile avant droite, il ne sera décrit dans la suite de la description que l'assemblage de la pièce commune 10 de l'aile avant gauche, sur le côté gauche du véhicule.

Dans un premier temps, la languette de guidage 54 de l'aile avant gauche 16 est glissée dans l'évidement gauche 52, ce qui permet le maintien de la pièce commune 10 sur l'aile avant gauche 16. Ainsi, ces deux pièces sont manipulées simultanément.

L'aile avant gauche 16 est alors mise en position par rapport à d'autres éléments constituant le véhicule tels que la portière avant et le passage de la roue avant. Lorsque l'aile avant gauche 16 est dans sa position définitive, la pièce commune de fixation 10 peut être légèrement déplacée de façon que les trous 30 et les trous 48 correspondent aux orifices réalisés dans l'élément structurel 12 et l'aile avant 16 respectivement. Cela permet ainsi le passage des premiers 31 et des deuxièmes 50 moyens de fixation qui sont alors serrés de façon à immobiliser l'aile avant gauche 16 par rapport à l'élément structurel 12, par l'intermédiaire de la pièce commune de fixation 10. Les moyens de passage 54 offrent un accès facile aux deuxièmes moyens de fixation 50.

Enfin, le bouclier avant 14 est rapporté sur le véhicule, il est positionné, par exemple, par rapport aux ailes avant et à la calandre. Puis les troisièmes moyens de fixation 72 coopèrent avec les moyens de maintien 70 pour fixer le bouclier avant par rapport à la caisse du véhicule.

Cet assemblage permet de positionner facilement et avec précision le bouclier avant 16 et les ailes avant du véhicule par rapport à d'autres éléments et/ou d'habillage tels que les portières avant, le capot moteur..., et assure ainsi le respect des contraintes liées au style et à l'aspect, telles que l'existence de jeux qui sont déterminés avec précision entre les bords de deux éléments de carrosserie adjacents tels qu'une aile avant et la portière avant correspondante.

De plus, cet assemblage est réalisé avec la pièce commune de fixation 10 qui est utilisée indifféremment du côté droit et de côté gauche du véhicule, réduisant ainsi, d'une part les coûts liés à l'utilisation de plusieurs pièces, tels que les coûts de conception, de fabrication, de gestion et, d'autre part, le temps de montage sur le véhicule.

## Revendications

1. Agencement pour la fixation d'un premier (16) et d'un second (14) éléments adjacents de carrosserie et/ou d'habillage sur un élément structurel (12) de caisse d'un véhicule automobile, avec une pièce commune de fixation (10) pour l'assemblage et la fixation du premier (16) et du second (14) éléments par rapport à la structure du véhicule, **caractérisé en ce qu'**il comporte des moyens de maintien (70) au moins de l'élément (16) qui permettent le réglage de la position dudit au moins un élément par rapport à la pièce commune de fixation (10).

2. Agencement de fixation selon la revendication précédente, **caractérisé en ce que** la pièce commune de fixation (10) comprend :
- deux pieds longitudinaux (26, 28) qui comportent chacun une zone de fixation avec l'élément structurel (12) de caisse ;
- deux flasques transversaux (22, 24) qui sont chacun solidaires d'un pied longitudinal (26, 28), qui sont sensiblement parallèles entre eux et qui comportent chacun des zones de fixation (48, 58) du premier élément (16) adjacent du véhicule ainsi que des moyens de passage (56, 66) d'un outil de fixation lors de l'assemblage du premier élément (16) adjacent sur le flasque latéral (24 ,22) opposé, les moyens de passage de l'outil étant sensiblement alignés avec les zones de fixation (48, 58) du premier élément (16) adjacent selon une direction sensiblement perpendiculaire au flasque opposé (24, 22); et
- un dos latéral (20) qui relie les deux flasques transversaux (22, 24) et qui comporte des moyens de maintien (70) du second élément (14) adjacent.

3. Agencement de fixation selon la revendication précédente, **caractérisé en ce que** les pieds longitudinaux (26, 28) sont fixés sur une paroi de l'élément structurel (12) de caisse qui est orientée vers un côté latéral du véhicule.

4. Agencement de fixation selon l'une des revendications 2 ou 3, **caractérisé en ce que** les deux flasques transversaux (22, 24) s'étendent dans des plans sensiblement perpendiculaires aux pieds longitudinaux (26, 28).

5. Agencement de fixation selon l'une des revendications 2 ou 4, **caractérisé en ce qu'**au moins un flasque latéral (22, 24) comporte un évidement (52, 64) qui permet, lors de l'assemblage, le passage d'une languette (54) de guidage du premier élément 16 adjacent de façon à maintenir ces deux pièces (10, 16) l'une par rapport à l'autre, avant leur fixation.

6. Agencement de fixation selon l'une quelconque des revendications 2 à 5, **caractérisé en ce que** les moyens (56, 66) pour le passage d'un outil de fixation comprennent au moins une ouverture (56, 66) réalisée dans le flasque latéral (22, 24).

7. Agencement de fixation selon l'une quelconque des revendications 2 à 6, **caractérisé en ce que** les pieds longitudinaux (26, 28) et les moyens de maintien (70) du second élément adjacent (14) sont contenus dans deux plans sensiblement parallèles.

8. Agencement de fixation selon l'une quelconque des revendications 2 à 7, **caractérisé en ce que** les zones de fixation des pieds longitudinaux (26, 28) comportent un trou (30) dont le diamètre est supérieur au diamètre des premiers moyens de fixation (31) avec lequel il coopère, de façon à permettre le réglage de la position de la pièce commune (10) par rapport à l'élément structurel (12) de caisse, avant leur fixation.

9. Agencement de fixation selon l'une quelconque des revendications 2 à 8, **caractérisé en ce que** les zones de fixation des flasques transversaux (22 ,24) comportent au moins un trou (48, 58) dont le diamètre est supérieur au diamètre des seconds (50) moyens de fixation avec lequel il coopère, de façon à permettre le réglage de la position du premier élément (16) adjacent par rapport à la pièce commune (10), avant leur fixation.

10. Agencement de fixation selon l'une quelconque des revendications 2 à 9, **caractérisé en ce que** les moyens de maintien (70) du second élément adjacent comportent au moins un trou dont le diamètre est supérieur au diamètre des troisièmes moyens de fixation (72) avec lequel il coopère, de façon à permettre le réglage de la position du second élément (14) adjacent par rapport à la pièce commune (10), avant leur fixation.

11. Agencement de fixation selon l'une quelconque des revendications 2 à 10, **caractérisé en ce que** le premier élément adjacent (16) est une aile avant droite ou avant gauche (16) du véhicule.

12. Agencement de fixation selon l'une quelconque des revendications 2 à 11, **caractérisé en ce que** le second élément adjacent (14) est un bouclier avant (14) du véhicule.

## Claims

1. Arrangement for fixing a first (16) and a second (14) adjacent body and/or casing element to a structural bodywork element (12) of a motor vehicle, having a common fixing part (10) for assembling and fixing the first (16) and second (14) elements relative to the structure of the vehicle, **characterised in that** the arrangement comprises means (70) for holding at least the element (16) which allow the position of said at least one element to be adjusted in relation to the common fixing part (10).

2. Fixing arrangement according to the preceding claim, **characterised in that** the common fixing part (10) comprises two longitudinal feet (26, 28) which each have a zone for fixing to the structural bodywork element (12); two transverse flanges (22, 24) both of which are integral with a longitudinal foot and run substantially parallel to each other and which both comprise zones (48, 58) for fixing the first adjacent element (16) of the vehicle and also means (56, 66) for the passage of a fixing device during assembly of the first adjacent element (16) to the opposite lateral flange (24, 22), the means for the passage of the device being substantially aligned with the zones (48, 58) for fixing the first adjacent element (16) in a direction substantially perpendicular to the opposite flange (22, 24), and a lateral back (20) which connects the two transverse flanges (22, 24) and comprises means (70) for holding the second adjacent element (14).

3. Fixing arrangement according to the preceding claim, **characterised in that** the longitudinal feet (26, 28) are fixed to a wall of the structural bodywork element (12), which wall is oriented towards a lateral side of the vehicle.

4. Fixing arrangement according to either claim 2 or claim 3, **characterised in that** the two transverse flanges (22, 24) extend along planes that are substantially perpendicular to the longitudinal feet (26, 28).

5. Fixing arrangement according to either claim 2 or claim 4, **characterised in that** at least one lateral flange (22, 24) comprises an aperture (52, 64) which allows the passage of a tongue (54) for guiding the first adjacent element (16) during assembly such that these two parts (10, 16) can be held in place in relation to each other before they are fixed in place.

6. Fixing arrangement according to any one of claims 2 to 5, **characterised in that** the means (56, 66) for the passage of a fixing device comprise at least one opening (56, 66) provided in the lateral flange (22, 24).

7. Fixing arrangement according to any one of claims 2 to 6, **characterised in that** the longitudinal feet (26, 28) and the means (70) for holding the second adjacent element (14) are contained in two substantially parallel planes.

8. Fixing arrangement according to any one of claims 2 to 7, **characterised in that** the zones for fixing the longitudinal feet (26, 28) comprise a hole (30), the diameter of which is greater than the diameter of the first fixing means (31) with which it cooperates in such a way as to allow the position of the common part (10) to be adjusted in relation to the structural element (12) of the bodywork before they are fixed in place.

9. Fixing arrangement according to any one of claims 2 to 8, **characterised in that** the zones for fixing the transverse flanges (22, 24) comprise at least one hole (48, 58), the diameter of which is greater than the diameter of the second fixing means (50) with which it cooperates in such a way as to allow the position of the first adjacent element (16) to be adjusted in relation to the common part (10) before they are fixed in place.

10. Fixing arrangement according to any one of claims 2 to 9, **characterised in that** the means (70) for holding the second adjacent element comprise at least one hole, the diameter of which is greater than the diameter of the third fixing means (72) with which it cooperates in such a way as to allow the position of the second adjacent element (14) to be adjusted in relation to the common part (10) before they are fixed in place.

11. Fixing arrangement according to any one of claims 2 to 10, **characterised in that** the first adjacent element (16) is a front bumper (16) on the right or left-hand side of the vehicle.

12. Fixing arrangement according to any one of claims 2 to 11, **characterised in that** the second adjacent element (14) is a front protective moulding (14) of the vehicle.

## Patentansprüche

1. Einrichtung zum Befestigen eines ersten (16) und eines zweiten (14) anliegenden Karosserieelements und/oder Verkleidungselement an einem konstruktiven Element (12) der Karosserie eines Kraftfahrzeuges, mit einem gemeinsamen Befestigungsteil (10) für die Montage und Befestigung des ersten (16) und des zweiten (14) Elementes an der Fahrzeugkonstruktion, **dadurch gekennzeichnet, dass** sie Haltemittel (70) für mindestens das Element (16) besitzt, welche die Einstellung der Position des mindestens einen Elementes an dem gemeinsamen Befestigungsteil (10) erlauben.

2. Einrichtung nach dem vorhergehenden Anspruch, **dadurch gekennzeichnet, dass** das gemeinsame Befestigungsteil (10) folgendes aufweist:
- zwei längsverlaufende Füße (26, 28), die jeweils eine Befestigungszone mit einem konstruktiven Element (12) für die Karosserie besitzen;
- zwei querverlaufende Flansche (22, 24), die jeweils mit einem längsverlaufenden Fuß (26, 28) verbunden sind, und im wesentlichen untereinander parallel verlaufen, und die jeweils Befestigungszonen (48, 58) des ersten Elementes (16) besitzen, das an dem Kraftfahrzeug anliegt, sowie Durchgangselemente (56, 66) eines Befestigungswerkzeuges bei der Montage des ersten Elementes (16), das an dem gegenüberliegenden seitlichen Flansch (24, 22) anliegt, wobei die Durchgangselemente des Werkzeuges im wesentlichen mit den Befestigungszonen (48, 58) des anliegenden ersten Elementes (16) fluchten, und zwar in einer Richtung im wesentlichen senkrecht zum gegenüberliegenden Flansch (24, 22); und
- eine seitliche Rückwand (20), welche die beiden querverlaufenden Flansche (22, 24) miteinander verbindet, und Haltelemente (70) des zweiten anliegenden Elementes (14) besitzt.

3. Einrichtung nach dem vorhergehenden Anspruch, **dadurch gekennzeichnet, dass** die längsverlaufenden Füße (26, 28) an einer Wand des konstruktiven Elementes (12) der Karosserie befestigt sind, die zu einer Seite des Fahrzeuges hin ausgerichtet ist.

4. Einrichtung nach einem der Ansprüche 2 oder 3, **dadurch gekennzeichnet, dass** die beiden querverlaufenden Flansche (22, 24) in Ebenen verlaufen, die im wesentlichen senkrecht zu den längsverlaufenden Füßen (26, 28) ausgerichtet sind.

5. Einrichtung nach einem der Ansprüche 2 oder 4, **dadurch gekennzeichnet, dass** mindestens ein seitlicher Flansch (22, 24) eine Aussparung (52, 64) besitzt, die während der Montage den Durchgang einer Führungslasche (54) des ersten anliegenden Elementes 16 ermöglicht, so dass diese beiden Teile (10, 16) vor ihrer Befestigung aneinander gehalten werden können.

6. Einrichtung nach einem der Ansprüche 2 bis 5, **dadurch gekennzeichnet, dass** die Elemente (56, 66) für den Durchgang eines Befestigungswerkzeuges mindestens eine Öffnung (56, 66) aufweisen, die in dem seitlichen Flansch (22, 24) hergestellt wurde.

7. Einrichtung nach einem der Ansprüche 2 bis 6, **dadurch gekennzeichnet, dass** sich die längsverlaufenden Füße (26, 28) und die Halteelemente (70) des zweiten anliegenden Elementes (14) in zwei, im wesentlichen parallelen, Ebenen befinden.

8. Einrichtung nach einem der Ansprüche 2 bis 7, **dadurch gekennzeichnet, dass** die Befestigungszonen der längsverlaufenden Füße (26, 28) ein Loch (30) besitzen, dessen Durchmesser größer ist als der Durchmesser der ersten Befestigungselemente (31) mit dem es zusammenwirkt, so dass die Einstellung der Position des gemeinsamen Teils (10) zu dem konstruktiven Element (12) der Karosserie vor seiner Befestigung möglich ist.

9. Einrichtung nach einem der Ansprüche 2 bis 8, **dadurch gekennzeichnet, dass** die Befestigungszonen der querverlaufenden Flansche (22, 24) mindestens ein Loch (48, 58) aufweisen, dessen Durchmesser größer ist als der Durchmesser der zweiten Befestigungselemente (50), mit dem es zusammenwirkt, so dass die Einstellung der Position des ersten anliegenden Elementes (16) zu dem gemeinsamen Teil (10) vor seiner Befestigung möglich ist.

10. Einrichtung nach einem der Ansprüche 2 bis 9, **dadurch gekennzeichnet, dass** die Halteelemente (70) des zweiten anliegenden Elementes mindestens ein Loch besitzen, dessen Durchmesser größer ist als der Durchmesser der dritten Befestigungselemente (72), mit denen es zusammenwirkt, so dass die Einstellung der Position des zweiten anliegenden Elementes (14) zu dem gemeinsamen Teil (10) vor seiner Befestigung möglich ist.

11. Einrichtung nach einem der Ansprüche 2 bis 10, **dadurch gekennzeichnet, dass** es sich bei dem ersten anliegenden Element (16) um einen rechten oder einen linken Kotflügel (16) des Kraftfahrzeuges handelt.

12. Einrichtung nach einem der Ansprüche 2 bis 11, **dadurch gekennzeichnet, dass** es sich bei dem zweiten anliegenden Element (14) um einen vorderen Stoßfänger (14) des Kraftfahrzeuges handelt.
